# EUROPEAN PATENT APPLICATION

(11) **EP 4 847 968 A1**
(43) Date of publication of application: **02.12.2026**
(21) Application number: 25205525.6
(22) Date of filing: 30.09.2025
(51) Int. Cl.: G01S 19/44, G01S 19/43, G01S 19/42, G01S 19/09, G01S 19/35, G01S 19/37

(54) **PRECISION POSITIONING METHOD WITH SOFTWARE-DEFINED GNSS RECEIVER (SDR - SOFTWARE DEFINED RADIO) IMPLEMENTED BY A COMPUTER, AND CORRESPONDING RECEIVER DEVICE**

(30) Priority: 28.05.2025 IT 202500012361
(71) Applicant: Sogei- Societa' Generale D'Informatica S.p.A., 00143 Roma (RM) (IT)
(72) Inventor: CAPUA, Roberto, 00143 Roma (RM) (IT); GATTUSO, Luca, 00143 Roma (RM) (IT); INNOCENTI, Manuele, 00143 Roma (RM) (IT); FRITTELLA, Fabio, 00143 Roma (RM) (IT); ANTONETTI, Daniele, 00143 Roma (RM) (IT); D'AMICO, Camillo, 00143 Roma (RM) (IT)
(74) Representative: Tiburzi, Andrea

(57) **Abstract**

The present invention relates to a Computer-implemented method (100) for precision positioning using a Global Navigation Satellite System (GNSS), comprising the following steps: receiving (110) sampled and digitized GNSS signals from a sampling unit (5); processing (120) the digitized GNSS signals by means of a processing module (21) to generate code and carrier phase observable measures from the signal received from the GNSS satellites; performing (130) Real-Time Kinematic (RTK) positioning computations using said GNSS observable measures; and providing (140) the positioning via a display unit (4) connected to said processing module (21).

The present invention also relates to a GNSS receiver device (1).

## Description

The present invention relates to a precision positioning method with a GNSS (Global Navigation Satellite Systems) receiver with entirely computer processing via SDR (Software Defined Radio) technology and related hardware reception system.

### Field of invention

More specifically, the invention concerns a GNSS (Global Navigation Satellite System) receiver, and more specifically a precision positioning method using a software-generated GNSS receiver.

In the following, the description will focus on positioning, but it is clear that it should not be considered limited to this specific use.

### Prior art

Global Navigation Satellite Systems (GNSS) have become an essential tool for positioning and navigation in many fields. These systems rely on a constellation of satellites orbiting the Earth and transmitting radio signals containing information about their position and time. A ground-based GNSS receiver can calculate its three-dimensional position using signals from multiple satellites.

Traditionally, GNSS receivers have been implemented using dedicated hardware, with analog and digital components specifically designed to process satellite signals. This hardware approach has enabled compact and energy-efficient receivers, suitable for use in portable devices. However, hardware receivers have some limitations in terms of flexibility and upgradeability.

With the increasing performance of general-purpose processors, interest in software-defined GNSS receivers (SDRs) has grown in recent years. In an SDR receiver, much of the signal processing is performed in software on programmable processors, rather than on dedicated hardware. This approach offers greater flexibility, allowing, among other things, the receiver's functionality to be modified simply by updating the software.

However, implementing fully software-based GNSS receivers poses several technical challenges. Real-time processing of GNSS signals requires significant computational resources, which can be difficult to achieve on portable devices with limited computing power. Furthermore, achieving performance comparable to hardware receivers in terms of sensitivity, accuracy, and power consumption is nontrivial using general-purpose components.

Another challenge is achieving high-precision positioning using software receivers. Precision positioning techniques, such as Real-Time Kinematics (RTK), require complex algorithms and the processing of large amounts of data, starting from radio frequency signal samples to calculate raw measurements (hereinafter referred to as observable measurements), which can be challenging to implement efficiently via software.

The industry is experiencing a need for a method that allows for precision positioning using a GNSS receiver, overcoming one or more of the issues described above.

### Purpose of the invention

In light of the above, it is, therefore, the purpose of the present invention to provide a method for achieving precision positioning using a GNSS receiver defined entirely via software.

Another aim of the invention is to implement precision positioning techniques such as Real Time Kinematic (RTK) efficiently on general purpose processors.

It is also aim of the present invention to enable the execution of complex GNSS positioning algorithms on portable devices with limited computing capabilities.

Another aim of the invention is to provide a software GNSS receiver capable of achieving performance comparable to hardware receivers for high-precision positioning.

It is also the purpose of the present invention to implement a flexible and easily upgradable software GNSS receiver.

### Object of the invention

It is therefore the specific object of the present invention a computer-implemented method for precision positioning using a Global Navigation Satellite System (GNSS), comprising the following steps: receiving sampled and digitized GNSS signals from a sampling unit; processing the digitized GNSS signals by means of a processing module to generate code and carrier phase observable measures from the signal received from the GNSS satellites; performing Real-Time Kinematic (RTK) positioning computations using said GNSS observable measures; and providing the positioning via a display unit connected to said processing module.

Always according to the invention, between said step of performing the computations and said step of providing the positioning, it may be comprised a step of generating carrier phase observables in order to resolve the carrier phase ambiguities to obtain precision positioning.

Still according to the invention, said step of resolving the carrier phase ambiguities may comprise using the LAMBDA method (Least-squares AMBiguity Decorrelation Adjustment) implemented by software.

Still according to the invention, said sampling unit may sample the GNSS signals at a frequency between 4 MHz and 20 MHz.

Further according to the invention, the step of processing the digitized GNSS signals may comprise the sub-step of performing a Parallel Search acquisition of the signals using a Fast Fourier Transform (FFT).

Preferably according to the invention, the step of processing the digitized GNSS signals may comprise the sub-step of performing signal tracking using a Phase-Locked Loop (PLL) and a Delay-Locked Loop (DLL), wherein said step of performing signal tracking using a PLL and a DLL is performed in software by said processing module.

Advantageously according to the invention, the step of performing the RTK positioning computations may comprise the use of an Extended Kalman Filter (EKF) or an Unscented Kalman Filter (UKF).

Still according to the invention, after said receiving step, it may comprise the step of data for RTK processing, coming from a ground-based augmentation system.

Further according to the invention, it may comprise the step of data integration from a Satellite-Based Augmentation System (SBAS) to improve positioning accuracy.

Preferably according to the invention, anti-spoofing techniques may be implemented based on monitoring the carrier-to-noise ratio (C/N₀) of the received GNSS signals.

Still according to the invention, the receiving step may comprise the sub-step of estimating and correcting errors caused by clock instability in the receiving circuit via a clock steering algorithm.

Preferably according to the invention, such clock steering algorithm may correct the intermediate frequency *f_{IF}* (Intermediate Frequency IF) and the downconversion frequency *f_{down}* based on an estimated clock drift *ṫᵤ,* wherein said clock drift is derived from the following relation: ${f}_{R} = {f}_{n} ∗ \left(1+{\dot{t}}_{u}\right)$ where *f_{R}* is the actual clock frequency, *fₙ* is its nominal frequency, and *ṫᵤ* is the clock drift.

Further according to the invention, the estimation of the clock drift *ṫᵤ* may be performed by means of an Unscented Kalman Filter that processes Doppler measurements.

Still according to the invention, the processing of the digitized GNSS signals may comprise the use of SIMD (Single Instruction, Multiple Data) instructions to optimize performance on processors, such as general-purpose processors, of said processing module.

Preferably according to the invention, the high-precision positioning may have an accuracy of less than 5 centimeters.

It is also object of the present invention a GNSS receiver device comprising: an antenna for receiving said GNSS signals; a sampling unit for sampling and digitizing the GNSS signal received through said antenna; a processing and control unit, connected to said antenna, comprising a processing module, and a memory, connected to said processing module, storing software instructions that, when executed by said processing module, cause said processing module to perform the method disclosed according to the invention.

Preferably according to the invention, said processing module may comprise a processor, in particular a general-purpose processor, such as a processor of a laptop or tablet.

Still according to the invention, the GNSS receiver device may comprise a communication module to connect to the ground-based augmentation system and receive RTK correction data from a GNSS reference station network.

Further according to the invention, the GNSS receiver device may comprise a display unit, connected to said processing module.

Advantageously according to the invention, the processing module may be configured to implement a clock steering algorithm to correct errors caused by clock instability in the receiving circuit.

Preferably according to the invention, the processing module may be configured to estimate the clock drift by means of an Unscented Kalman Filter processing Doppler measurements.

It is also object of the present invention a computer program comprising instructions which, when the program is executed by a computer, cause the computer to perform the steps of the method as defined above.

It is also object of the present invention a computer-readable storage medium comprising instructions which, when executed by a computer, cause the computer to perform the steps of the method as defined above.

### Brief description of the figures

The present invention will be now described, for illustrative but not limitative purposes, according to its preferred embodiments, with particular reference to the figures of the enclosed drawings, wherein:
figure 1 illustrates a block diagram of a software-defined GNSS receiver system, according to an embodiment of the present invention;
figure 2 illustrates a flowchart showing the signal processing operations for a software-defined GNSS receiver of figure 1;
figure 3 illustrates a flowchart of a method for software-defined positioning of a GNSS receiver according to the present invention; and
figure 4 shows a block diagram illustrating the sub-phases of one stage of the method in figure 3.

### Detailed description

In the various figures, similar parts will be indicated with the same numerical references.

The invention relates to a method and device for precision positioning using a software-defined global navigation satellite system (GNSS) receiver.

The technical aspect underlying the invention is the implementation of the functionality of a traditional GNSS receiver through software processing of digitized satellite signals, rather than through dedicated hardware components.

This software-defined approach allows the creation of a flexible and reconfigurable GNSS receiver, capable of performing high-precision positioning operations on general-purpose computing platforms such as laptops or tablets.

The operating method comprises the acquisition, processing of GNSS observable measurements, obtained by processing radio frequency signal samples, the execution of advanced positioning calculations and the presentation of the results to the user.

The method is implemented as a computer program comprising instructions that, when executed by a computer, cause the steps of the method to be executed. These software instructions are stored on a computer-readable storage medium, such as the memory of a computer or mobile device.

The use of advanced software techniques allows for positioning performance comparable to that of traditional hardware GNSS receivers, but with greater flexibility and upgradeability. This makes the system particularly suitable for applications requiring precision positioning in areas such as topographic surveying or precision navigation.

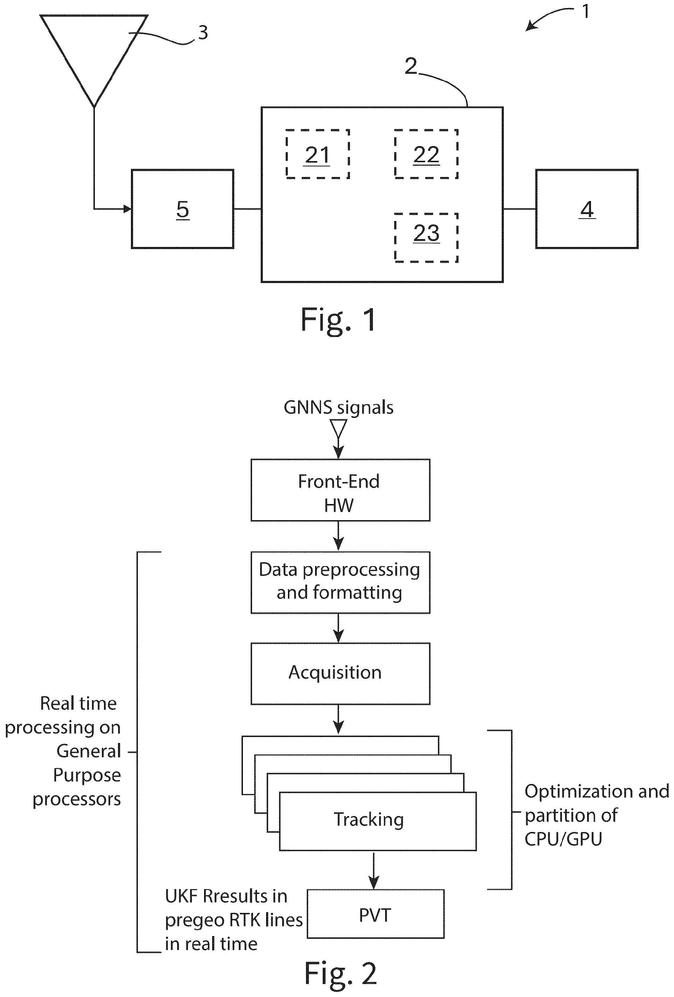

Referring to figure 1, a software-defined GNSS receiver device 1 according to the present invention is observed, which comprises several components for processing GNSS signals and providing precision positioning.

The GNSS receiver device 1 receives an input signal 1 from the GNSS satellites through an antenna 3 for receiving GNSS signals.

The antenna 3 is connected to a processing and control unit 2, which represents the heart of the software-defined receiver system.

The GNSS receiver device 1 comprises a processing and control unit 2, which in turn has a sampling unit 5 for digitizing the analog GNSS signals received from the antenna 3.

The sampling unit 5 is designed and implemented using commercial off-the-shelf hardware components and contains a software module for pre-treatment, buffering and formatting of the data for real-time sending to the processing module 21.

The digitized GNSS signals are then sent to a processing module 21 within the processing and control unit 2.

The processing module 21 comprises a processor, specifically a general-purpose processor such as that of a laptop or tablet. This allows the GNSS receiver device system 1 to operate on various hardware platforms such as desktops, notebooks, and tablets.

The processing module 21 is connected to a memory 22 that stores the software instructions needed to perform the various GNSS signal processing stages. These instructions, when executed by the processing module 21, cause the GNSS receiving device to perform the precision positioning method, described in detail below.

The processing module 21 comprises several software subsystems that perform specific functions:
- an acquisition subsystem takes care of the search and initial acquisition of satellite signals;
- a tracking subsystem maintains lock on the acquired signals and extracts pseudorange measurements, through code measurements, and phase measurements, through processing on the signal carrier;
- a positioning subsystem uses the extracted measurements to calculate the position of the receiver;
- an output subsystem takes care of formatting and presenting the positioning results.

The GNSS receiver device 1 also comprises a communication module 23 for receiving RTK correction data from a terrestrial augmentation service, based on a network of GNSS reference stations.

Finally, the GNSS receiver device 1 comprises a display unit 4 connected to the processing module 21, which allows the positioning results and other useful information to be presented to the user.

The processing module 21 also implements a "clock steering" algorithm to correct errors caused by clock instability in the hardware front-end receiver circuit.

The clock may have a "drift", that is, a deviation of the operating frequency from the nominal value, which can be expressed as: ${f}_{R} = {f}_{n} ∗ \left(1+{\dot{t}}_{in}\right)$ in which *f_{R}* is the actual clock frequency, *fₙ* its nominal frequency and *ṫᵢₙ* the clock drift.

This expression can also be applied to the so-called "down conversion" frequency *f_{down}* and the sampling frequency *f_{S}*, since the down converter and the analog-to-digital converter (ADC) inside the Front-End share the same clock.

This causes the drift error to propagate both to the pseudorange measurements (via the *f_{S}*) than those of Doppler and phase (through the *f_{gown}* from which the IF frequency *f_{IF}* is obtained, to which the GNSS radio frequency signal is converted).

The measurements taken must then be corrected by applying an algorithm known as "clock steering". This allows the clock drift value estimated by the SDR receiver to be used to correct *f_{S}* and *f_{IF}* as follows: ${f}_{{S}_{i}} = {f}_{S} ∗ \left(1+{\dot{t}}_{{in}_{i - 1}}\right)$ ${f}_{{IF}_{act}} = {f}_{RF} - {f}_{{down}_{act}} = {f}_{RF} - {f}_{down} ∗ \left(1+{\dot{t}}_{in}\right) = {f}_{IF} - {f}_{down} ∗ {\dot{t}}_{in}$ in which *f_{IFact}* and *f_{downact}* are respectively the real IF (Intermediate Frequency) and "down conversion" frequencies, *f_{RF}* is the radio frequency of the GNSS signal received by the antenna.

In other words, *f_{RF}* is the radio frequency of the received signal and is the frequency at which the GNSS signal is transmitted by the satellite and received by the antenna. These frequencies are typically in the microwave range, for example the L-band for GPS signals (around 1.2-1.5 GHz).

Instead *f_{IF}* is the intermediate frequency, a signal derived from the RF signal after a process called frequency conversion (defined above as down conversion). In a receiver, the RF signal is translated to a lower frequency (precisely the *f_{IF}*), where it is easier to process electronically. Furthermore, *f_{IFact}* is the actual intermediate frequency used after conversion, while *f_{downact}* is the actual conversion frequency (i.e. the frequency of the local oscillator used for downconversion). Finally, *f_{RF}* is the frequency of the RF signal received by the antenna, therefore the original frequency of the GNSS signal.

The SDR (Software Defined Radio) software, or positioning method, calculates phase measurements by integrating Doppler measurements over time.

It is necessary to perform a correct initialization of the phase measurements by frequency integration *F_{IFact}* (including the bias due to clock error) in the time interval equal to the fractional part of the code period (code phase), so it differs depending on the reception time of the signals from the various satellites. This ensures the temporal alignment of the phase measurements, which are therefore coherent.

To estimate drift, the proposed SDR solution uses an Unscented Kalman Filter, with Doppler measurement processing, unlike what is normally done with an Extended Kalman Filter. This solution allows for better management of nonlinearities and robustness of the drift estimate obtained.

The Clock Steering technique, integrated with the clock drift estimation via the Unscented Kalman Filter, allows for a stable and robust real-time precision RTK positioning solution. The system is able to process GPS and SBAS signals (*Satellite Based Augmentation System*), providing precision positioning comparable to that of dedicated hardware receivers, but with the flexibility and reconfigurability typical of a software-defined implementation.

Figure 2 schematically illustrates the signal processing operations for the software-defined GNSS receiver device 1.

The front-end hardware sampling unit 5 digitizes GNSS signals at a frequency between 4 MHz and 20 MHz. This sampling stage converts the received analog signals into digital samples suitable for software processing.

After sample preprocessing, with initial pretreatment and formatting, the signal moves on to the acquisition phase. Acquisition is performed in parallel using the fast Fourier transform (FFT) for an efficient search for present satellite signals.

The operations then continue through multiple tracking operations, represented as overlapping blocks indicating the parallel or sequential tracking of signals from multiple satellites. These tracking operations are part of a real-time processing phase performed on general-purpose processors (e.g., on laptops or tablets), as indicated by the left parenthesis.

Signal tracking is performed using a phase-locked loop (PLL) and a delay loop (DLL) implemented via software by the processing module 21. This technique, implemented via software in the present invention, allows maintaining the lock on the acquired signals and extracting the pseudorange and carrier phase measurements.

The tracking results feed into a PVT (Position, Velocity, and Timing) computation block. The diagram shows the optimization and partitioning between CPU and GPU processing, as indicated by the right parenthesis.

To optimize performance on the processors of the Compute Module 21, SIMD (Single Instruction, Multiple Data) instructions are used. Additionally, parallel programming and clock steering techniques are employed to improve overall processing efficiency.

The processing module 21 processes the digitized GNSS signals to generate observable GNSS signal parameters, which are then used for positioning calculations.

The diagram also indicates that UKF (Unscented Kalman Filter) processing is used to obtain real-time RTK results, as highlighted by the text "UKF Real-time RTK Results." The system can provide results not only in standard formats (e.g., NMEA strings) but also in the PREGEO data format.

Signal flow is represented by connecting lines between blocks, showing the sequential nature of the processing steps, while also indicating the parallel processing capabilities across multiple tracking blocks.

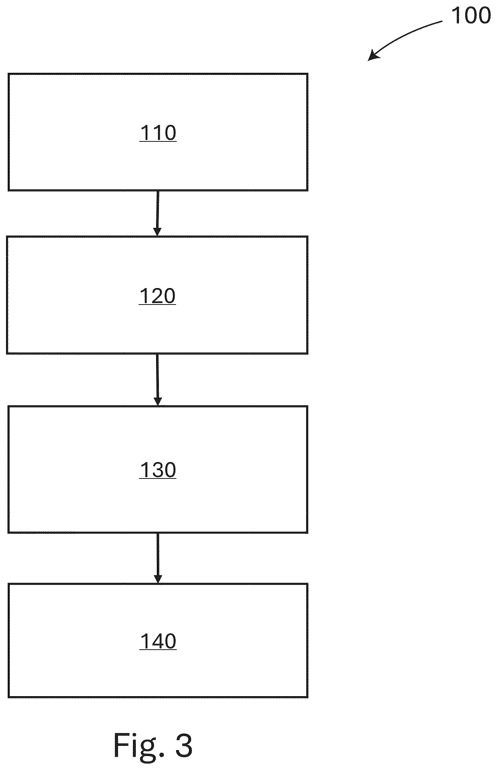

Referring to figure 3, a flowchart of a computer-implemented method 100 for precision positioning using a software-defined GNSS receiver device 1 is shown. Method 100 comprises a sequence of sequential steps, which are further described below.

The method 100 begins with a GNSS signal reception step 110. In this step, the signals from the GNSS satellites are digitized by the sampling front-end unit 5.

Method 100 then proceeds to step 120, where the digitized GNSS signals are processed. This processing comprises the acquisition and tracking of the satellite signals, as well as the extraction of observable measurements such as pseudorange and carrier phase.

Subsequently, the method 100 comprises a step 130, in which positioning calculations are performed by method (*RTK - Real-Time Kinematic*) using the GNSS observable measurements generated in the previous phase and the messages coming from a system terrestrial augmentation.

These RTK calculations involve the use of an extended Kalman filter (EKF) or an unscented Kalman filter (UKF) implemented via software. Specifically, the positioning subsystem uses an unscented Kalman filter to obtain an optimal position estimate. This latter filter, belonging to the extended Kalman filter family, allows, compared to the classic EKF filter, better management of nonlinearities by propagating the variance-covariance matrix point-wise, resulting in greater robustness of the obtained estimates. This unscented Kalman filter (UKF) is implemented via software in the solution under consideration.

During this phase, the software-implemented LAMBDA (Least-squares AMBiguity Decorrelation Adjustment) method is applied to resolve carrier phase ambiguities and achieve precise positioning.

This ambiguity resolution process is critical to achieving accuracy of less than 5 centimeters.

The 100 method also comprises the integration of corrections from a system of augmentation satellite (SBAS) to improve positioning accuracy.

The method 100 also includes a step 140, in which positioning information is provided via a display unit connected to the processing module. This allows the user to view high-precision positioning results.

The method 100 also implements anti-spoofing techniques based on signal-to-noise ratio monitoring ( $\frac{C}{{N}_{0}}$), of received GNSS signals. This allows the detection and exclusion of GNSS signal spoofing, increasing the robustness and reliability of the positioning system.

The flowchart in figure 3 shows the sequential nature of the signal processing and positioning operations, with each stage flowing directly into the next stage.

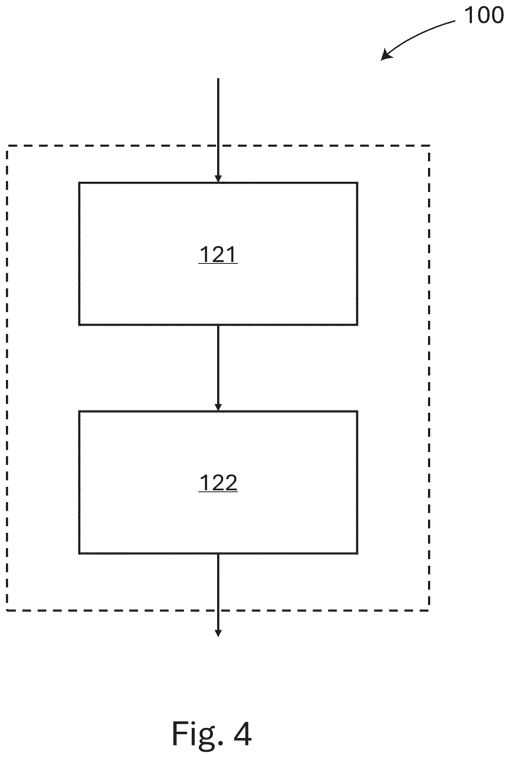

Figure 4 shows a block diagram illustrating the sub-phases of the processing phase 120.

The first acquisition sub-phase 121 receives an input signal from the previous phase. This acquisition phase 121 involves the search and initial acquisition of GNSS satellite signals.

At this stage, Parallel Search processing techniques are used, based on the fast Fourier transform (FFT), to effectively identify satellite signals present in the digitized input signal. In other words, in this phase, the GNSS satellites transmitting the received signal are identified. The acquisition phase 121 performs a search across different frequency bands and PRN codes to detect the presence of valid GNSS signals.

At the output of the acquisition phase 121, a tracking phase 122 is performed. The tracking phase 122 aims to maintain the lock on the acquired signals and extract the pseudorange and carrier phase measurements.

This phase is performed using software-implemented phase-loop loops (PLLs) and delay loops (DLLs). The tracking phase 122 continuously monitors the frequency and phase variations of the received signals, adjusting its parameters to maintain synchronization with the signals of the moving satellites.

The processed output signal from tracking stage 122 contains observable pseudorange and carrier phase measurements for each tracked satellite, which are subsequently used for positioning calculations.

The software implementation of these functions allows for greater flexibility than traditional hardware solutions, allowing algorithm updates and optimizations without hardware modifications.

Furthermore, running on general-purpose processors allows leveraging parallel processing capabilities and SIMD instructions to improve the overall performance of the GNSS signal processing system.

Consider that the method may be implemented as a computer program including instructions that, when the program is executed by a computer, cause the computer to execute the steps of said method.

Furthermore, said method may be stored in a computer-readable storage medium comprising instructions that, when executed by a computer, cause the computer to perform the steps of said method as defined above.

### Advantages

An advantage of the present invention is that it provides a method for achieving precision positioning using a GNSS receiver implemented entirely in software, allowing for greater flexibility and ease of upgradeability compared to traditional hardware receivers.

Another advantage of the present invention is that it can efficiently implement precision positioning techniques such as Real Time Kinematic (RTK) on general-purpose processors or devices, making it possible to run complex algorithms on portable devices with limited computing power.

Another advantage of the present invention is that it achieves performance comparable to hardware receivers for precision positioning, while using a completely software architecture.

Another advantage of the present invention is that it allows the implementation of advanced features such as the integration of corrections from satellite augmentation systems (e.g., SBAS or Galileo HAS-High Accuracy Service) and anti-spoofing techniques, further improving positioning accuracy and reliability.

It is also an advantage of the present invention to optimize performance on general-purpose processors through the use of techniques such as SIMD instructions, enabling efficient processing of real-time GNSS signals.

While aspects of the invention have been described in terms of various specific embodiments, it will be apparent to those of ordinary skill in the art that many modifications, changes, and omissions are possible without departing form the spirt and scope of the claims. In addition, unless specified otherwise herein, the order or sequence of any process or method steps may be varied or re-sequenced according to alternative embodiments.

Reference has been made in detail to embodiments of the disclosure, one or more examples of which are illustrated in the drawings. Each example is provided by way of explanation of the disclosure, not limitation of the disclosure. In fact, it will be apparent to those skilled in the art that various modifications and variations can be made in the present disclosure without departing from the scope or spirit of the dis-closure. Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

When elements of various embodiments are introduced, the articles "a", "an", "the", and "said" are intended to mean that there are one or more of the elements. The terms "comprising", "including", and "having" are intended to be inclusive and mean that there may be additional elements other than the listed elements.

The subject matter described herein can be implemented in digital electronic circuitry, or in computer software, firmware, or hardware, including the structural means disclosed in this specification and structural equivalents thereof, or in combinations of them. The subject matter described herein can be implemented as one or more computer program products, such as one or more computer programs tangibly embodied in an information carrier (e.g., in a machine readable storage device), or embodied in a propagated signal, for execution by, or to control the operation of, da-ta processing apparatus (e.g., a programmable processor, a computer, or multiple computers). A computer program (also known as a program, software, software ap-plication, or code) can be written in any form of programming language, including compiled or interpreted languages, and it can be deployed in any form, including as a stand alone program or as a module, component, subroutine, or other unit suitable for use in a computing environment. A computer program does not necessarily correspond to a file. A program can be stored in a portion of a file that holds other pro-grams or data, in a single file dedicated to the program in question, or in multiple coordinated files (e.g., files that store one or more modules, sub programs, or portions of code). A computer program can be deployed to be executed on one computer or on multiple computers at one site or distributed across multiple sites and interconnected by a communication network.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Computer-implemented method (100) for precision positioning using a Global Navigation Satellite System (GNSS), comprising the following steps:
receiving (110) sampled and digitized GNSS signals from a sampling unit (5);
processing (120) the digitized GNSS signals by means of a processing module (21) to generate code and carrier phase observable measures from the signal received from the GNSS satellites;
performing (130) Real-Time Kinematic (RTK) positioning computations using said GNSS observable measures; and
providing (140) the positioning via a display unit (4) connected to said processing module (21).

2. Method (100) according to claim 1, **characterized in that**, between said step of performing (130) the computations and said step of providing (140) the positioning, it comprises a step of generating carrier phase observables in order to resolve the carrier phase ambiguities to obtain precision positioning.

3. Method (100) according to the preceding claim, **characterized in that** said step of resolving the carrier phase ambiguities comprises using the LAMBDA method (Least-squares AMBiguity Decorrelation Adjustment) implemented by software.

4. Method (100) according to any one of the preceding claims, **characterized in that** the step of processing (120) the digitized GNSS signals comprises the sub-step of performing a Parallel Search (121) acquisition of the signals using a Fast Fourier Transform (FFT); and **in that** the step of processing (120) the digitized GNSS signals comprises the sub-step of performing signal tracking (122) using a Phase-Locked Loop (PLL) and a Delay-Locked Loop (DLL),
wherein said step of performing signal tracking (122) using a PLL and a DLL is performed in software by said processing module (21).

5. Method (100) according to any one of the preceding claims, **characterized in that** the step of performing the RTK positioning computations (130) comprises the use of an Extended Kalman Filter (EKF) or an Unscented Kalman Filter (UKF).

6. Method (100) according to any one of the preceding claims, **characterized in that**, after said receiving (110) step, it comprises the step of data for RTK processing, coming from a ground-based augmentation system.

7. Method (100) according to any one of the preceding claims, **characterized in that** it comprises the step of data integration (160) from a Satellite-Based Augmentation System (SBAS) to improve positioning accuracy.

8. Method (100) according to any one of the preceding claims, **characterized in that** it comprises the implementation of anti-spoofing techniques based on monitoring the carrier-to-noise ratio (C/N₀) of the received GNSS signals.

9. Method (100) according to any one of the preceding claims, **characterized in that** said receiving (110) step comprises the sub-step of estimating and correcting errors caused by clock instability in the receiving circuit via a clock steering algorithm.

10. Method (100) according to the preceding claim, **characterized in that** said clock steering algorithm corrects the intermediate frequency *f_{IF}* (Intermediate Frequency IF) and the down-conversion frequency *f_{down}* based on an estimated clock drift *ṫᵤ*, wherein said clock drift is derived from the following relation: ${f}_{R} = {f}_{n} ∗ \left(1+{\dot{t}}_{u}\right)$ where *f_{R}* is the actual clock frequency, *fₙ* is its nominal frequency, and *ṫᵤ* is the clock drift.

11. Method (100) according to claim 9 or 10, **characterized in that** the estimation of the clock drift *ṫᵤ* is performed by means of an Unscented Kalman Filter that processes Doppler measurements.

12. Method (100) according to any one of the preceding claims, **characterized in that** the processing of the digitized GNSS signals comprises the use of SIMD (Single Instruction, Multiple Data) instructions to optimize performance on processors, such as general-purpose processors, of said processing module (21).

13. GNSS receiver device (1) comprising:
an antenna (3) for receiving said GNSS signals;
a sampling unit (5) for sampling and digitizing the GNSS signal received through said antenna (3);
a processing and control unit (2), connected to said antenna (3), comprising
a processing module (21), and
a memory (22), connected to said processing module (21), storing software instructions that, when executed by said processing module (21), cause said processing module (21) to perform the method (100) according to any one of claims 1-12.

14. GNSS receiver device (1) according to the preceding claim, **characterized**
**in that** said processing module (21) comprises a processor, in particular a general-purpose processor, such as a processor of a laptop or tablet,
**in that** it comprises a communication module (23) to connect to the ground-based augmentation system and receive RTK correction data from a GNSS reference station network, and
**in that** it comprises a display unit (4), connected to said processing module (21).

15. GNSS receiver device (1) according to any one of claims 13-14, **characterized in that** the processing module (21) is configured to implement a clock steering algorithm to correct errors caused by clock instability in the receiving circuit.

16. GNSS receiver device (1) according to the preceding claim, **characterized in that** the processing module (21) is configured to estimate the clock drift by means of an Unscented Kalman Filter processing Doppler measurements.
